# EUROPEAN PATENT SPECIFICATION

(11) **EP 2 689 675 B1**
(45) Date of publication and mention of the grant of the patent: **01.06.2016**
(21) Application number: 12764361.7
(22) Date of filing: 23.03.2012
(51) Int. Cl.: A23L 23/00, A23L 29/294

(54) **SAUCE COMPOSITION**
SOSSENZUSAMMENSETZUNG
COMPOSITION DE SAUCE

(30) Priority: 25.03.2011 JP 2011067180
(43) Date of publication of application: 29.01.2014
(73) Proprietor: Kao Corporation, Chuo-ku Tokyo 103-8210 (JP)
(72) Inventor: NAKAGAWA, Tomohiro, Tokyo 131-8501 (JP); AOYAMA, Hiroshi, Tokyo 131-8501 (JP); KANEKO, Yuki, Tokyo 131-8501 (JP)
(74) Representative: Hoffmann Eitle
(86) International application number: PCT/JP2012/057526
(87) International publication number: WO 2012/133191

(56) References cited:
- WO-A1-2011/040505
- JP-A- 11 313 635
- JP-A- 2001 197 873
- JP-A- 2002 209 550
- JP-A- 2010 154 790

## Description

### Field of the Invention

The present invention relates to a sauce composition.

### Background of the Invention

As a sauce mainly composed of wheat flour, for example, a bechamel sauce is known. The bechamel sauce is a sauce using wheat flour, butter and cow's milk as a base for the sauce, and is also referred to as a white sauce or a white sauce mix. In general, the bechamel sauce is produced through a step of frying the wheat flour with the butter, and then adding the cow's milk thereto and heating the resultant mixture, and further adding kitchen salt or the like thereto. However, the wheat flour contains an abundance of gluten, and therefore easily forms lumps (undissolved lumps of flour) that affect smoothness of food texture, and thus, there is a limit on the quality of sauce.

Patent Literature 1 discloses a method for producing a white sauce using powder of puffed rice or powder of puffed corn in place of wheat flour, and describes that generation of lumps is suppressed. Moreover, Patent Literature 1 further describes that a white sauce produced by this method is also excellent in smoothness of food texture. However, rice powder or corn powder has a flavor different from a flavor of wheat flour, and therefore a traditional flavor of white sauce using the wheat flour is not obtained in the white sauce produced by the method described in Patent Literature 1. Moreover, Patent Literature 2 discloses a method that adds cross-linked starch such as adipic acid cross-linked cornstarch upon preparing a white sauce, and Patent Literature 3 discloses a method that simultaneously uses processed starch not subjected to swelling suppression processing, and cross-linked starch and thermally processed starch. The Patent Literatures 2 and 3 describe that the white sauces prepared by these methods are palatable with smooth food texture. However, the processed starch has a peculiar flavor, and therefore a traditional flavor of white sauce using the wheat flour is not obtained by these methods, either.

### Citation List

### Patent Literatures

Patent Literature 1: JP-A-9-294568 ("JP-A" means unexamined published Japanese patent application)
Patent Literature 2: JP-A-9-262077
Patent Literature 3: JP-A-11-18681

### Summary of the Invention

The present inventors found that, when a specific amount of aspartic acid and/or a salt thereof, namely, the aspartic acid or the salt thereof, or a combination thereof is added in the production of a bechamel sauce, lumps derived from gluten are hardly formed, and while maintaining a taste and a flavor inherent to the bechamel sauce, a sauce having smoother food texture can be obtained. The present invention was completed based on the above findings.

The present invention relates to a sauce composition containing gluten, sodium and aspartic acid, wherein the content of the sodium is from 5 to 65 parts by mass with respect to 100 parts by mass of the gluten, and the content of the aspartic acid is from 0.7 to 4 parts by mass with respect to 100 parts by mass of the gluten.

The present invention also relates to the use of aspartic acid or a salt thereof for suppressing lumps, wherein the method includes blending in aspartic acid in the production of a gluten-containing sauce composition.

The present invention further relates to a method of producing a gluten-containing sauce composition, wherein the method includes blending in sodium chloride in an amount of from 1 to 15 parts by mass, and aspartic acid and/or a salt thereof in an amount of from 0.1 to 0.45 parts by mass, with respect to 100 parts by mass of wheat flour.

Other and further features and advantages of the invention will appear more fully from the following description.

### Detailed Description of the Invention

The present invention is contemplated for providing a sauce composition that is mainly composed of gluten, and is excellent in both a taste and a flavor, and has smoother food texture.

The sauce composition according to the present invention is described in detail below.

The sauce composition according to the present invention is a sauce containing specific amounts of at least gluten, sodium and aspartic acid.

The gluten is a protein contained in grain such as wheat, barley and rye. In the sauce composition according to the present invention, the gluten per se may be blended in, but the gluten is ordinarily incorporated by blending in wheat flour or the like.

The content of gluten in the sauce composition can be measured by the method described in the after-mentioned Examples.

The sauce composition according to the present invention contains aspartic acid. The aspartic acid referred to in the present invention means one in the state of free aspartic acid or a salt of aspartic acid, and the content of aspartic acid defined in the present invention means a value of free aspartic acid analyzed using an amino acid analyzer. In the present invention, when the salt of aspartic acid is used, a salt-part constitutes the present invention as a salt, and aspartic acid-part constitutes the present invention as aspartic acid.

The above-described salt of aspartic acid is not particularly limited, but the salt is preferably sodium aspartate or potassium aspartate, and further preferably, sodium aspartate. Moreover, aspartic acid may be incorporated by blending in two or more kinds of salts of aspartic acid.

The above-described salt of aspartic acid may be a salt in which either one of two carboxyl groups of aspartic acid is substituted by an alkali metal salt or the like, or a salt in which both of two carboxyl groups of aspartic acid are substituted by alkali metals or the like, or may be a mixture thereof. Moreover, the aspartic acid contained in the sauce composition according to the present invention may be a D-isomer or L-isomer, or a mixture thereof, but preferably an L-isomer.

Although the content of the aspartic acid in the sauce composition according to the present invention is from 0.7 to 4 parts by mass with respect to 100 parts by mass of the gluten in the sauce, from viewpoints of an improvement in food texture, a taste and a flavor, suppression of a foreign taste derived from potassium, suppression of a butyric acid odor, and an improvement in richness or a flavor balance, the content is preferably from 0.9 to 4 parts by mass, more preferably from 1.5 to 3.9 parts by mass, more preferably from 1.8 to 3.5 parts by mass, more preferably from 2.2 to 3.35 parts by mass, more preferably from 2.2 to 2.9 parts by mass, and more preferably from 2.4 to 2.9 parts by mass.

The sauce composition according to the present invention contains a specific amount of sodium. The sodium means "sodium" or "Na" on food composition labeling, and is present in the form of a salt in the sauce composition. The sodium is ordinarily derived from a sodium salt blended in. The sodium salt is not particularly limited, and may be an inorganic sodium salt or a sodium salt of organic acid. Specific examples of the above-described inorganic sodium salts include sodium chloride, monosodium phosphate, disodium phosphate and the like. Moreover, specific examples of the above-described sodium salts of organic acid include sodium salts of amino acid, such as sodium glutamate and sodium aspartate; sodium salts of nucleic acid, such as sodium inosinate and sodium guanylate; and sodium gluconate, sodium succinate and trisodium citrate. In the sauce composition according to the present invention, one kind or two or more kinds of the above-described sodium salts can be blended, and sodium chloride can be preferably blended. For the purpose of blending in the sodium salt, kitchen salt such as native salt, solar salt, rock salt and table salt may be used.

Although the content of the sodium in the sauce composition according to the present invention is from 5 to 65 parts by mass with respect to 100 parts by mass of the gluten in the sauce composition, from viewpoints of an improvement in food texture, a taste or a flavor, an improvement in richness, and a flavor balance, the content is preferably from 5 to 45 parts by mass, more preferably from 8 to 45 parts by mass, more preferably from 15 to 45 parts by mass, and more preferably from 16 to 29 parts by mass.

The content of the sodium in the sauce composition can be measured using an atomic absorption spectrophotometer.

The sauce composition according to the present invention preferably contains casein. The casein is a protein contained in a dairy product. In the sauce composition according to the present invention, the casein per se may be blended, but the casein is ordinarily incorporated by blending in cow's milk or the like.

The content of the casein in the sauce composition according to the present invention is, from viewpoints of an improvement in a taste and flavor, preferably from 130 to 550 parts by mass, more preferably from 130 to 530 parts by mass, more preferably from 130 to 400 parts by mass, more preferably from 180 to 350 parts by mass, and more preferably from 200 to 320 parts by mass with respect to 100 parts by mass of the gluten in the sauce composition.

The content of the casein can be measured by the method described in the after-mentioned Examples.

The sauce composition according to the present invention preferably contains potassium. The potassium is present in the form of a salt in the sauce composition, and is ordinarily derived from a potassium salt blended in. The potassium salt is not particularly limited, and may be an inorganic potassium salt or a potassium salt of organic acid. Specific examples of the above-described inorganic potassium salts include potassium chloride, monopotassium phosphate, and dipotassium phosphate. Moreover, specific examples of the above-described potassium salts of organic acid include potassium salts of amino acid, such as potassium glutamate and potassium aspartate; potassium salts of nucleic acid, such as potassium inosinate and potassium guanylate; and potassium gluconate, potassium succinate and tripotassium citrate. In the sauce composition according to the present invention, one kind or two or more kinds of the above-described potassium salts can be blended, and potassium chloride can be preferably blended.

The content of the potassium in the sauce composition according to the present invention is, from viewpoints of an improvement in food texture, a taste and a flavor, preferably from 10 to 75 parts by mass, more preferably from 10 to 65 parts by mass, more preferably from 12 to 65 parts by mass, more preferably from 16 to 55 parts by mass, and more preferably from 37 to 54 parts by mass with respect to 100 parts by mass of the gluten in the sauce composition.

The content of the potassium in the sauce composition can be measured using an atomic absorption spectrophotometer.

In the sauce composition according to the present invention, from viewpoints of an improvement in food texture, a taste and a flavor, the content of the sodium amounts to preferably from 0.15 to 0.75 part by mass, and more preferably from 0.38 to 0.75 parts by mass of 1 part by mass of a total content of sodium (Na) and potassium (K) (Na / (Na + K)). Moreover, if a viewpoint of reducing an intake of sodium is also taken into consideration, the content of the sodium described above is also preferably 0.2 to 0.45 part by mass.

Hereinafter, examples of preparation of the sauce compositions according to the present invention are described, but the present invention is not limited thereto.

The sauce composition according to the present invention can be obtained, for example, by hot mixing of specific amounts of wheat flour, butter, cow's milk, sodium chloride, and aspartic acid and/or a salt thereof, and optionally, potassium chloride, and allowing each component to be uniformly contained. "Hot mixing" in the present invention is used as a term in the concept including both of mixing while heating, and mixing under remaining heat after heating.

The order of hot mixing of each ingredient is not particularly limited. Each ingredient may be sequentially subjected to hot mixing, or all of each ingredient may be blended, and then heated and mixed. Moreover, one prepared by pre-blending a part of ingredients (or further subjected to hot mixing) may be subjected to hot mixing with other pre-blends.

In a preferred embodiment of the above-described hot mixing of each ingredient, the wheat flour and the butter are subjected to hot mixing, and the cow's milk is added thereto, and the resultant mixture is subjected to hot mixing, and thus the wheat flour, the butter, and the cow's milk are subjected to hot mixing. The sodium chloride, the aspartic acid and/or the salt thereof, and the potassium chloride can be added simultaneously or separately at any one of stages in a step of the above-described hot mixing of the wheat flour, the butter and the cow's milk, or may be added after the above-described hot mixing of the wheat flour, the butter and the cow's milk.

An example of a preferred method of preparation of the sauce composition according to the present invention is described below in more detail, but any one of the methods does not limit the present invention.

In the preparation of the sauce composition according to the present invention, the wheat flour and the butter are preferably subjected to hot mixing first. This hot mixing is preferably performed by heating the wheat flour together with the butter. As the above-described wheat flour, one sieved into fine flour is suitably used. The ratio of amounts of the butter to the wheat flour to be used is preferably from 50 to 150 parts by mass, more preferably from 70 to 130 parts by mass, and more preferably from 80 to 120 parts by mass of the butter with respect to 100 parts by mass of the wheat flour. Heating time and heating temperature are not particularly limited, but heating is preferably performed with avoiding scorching of the wheat flour, and the butter and the wheat flour are heated until the butter and the wheat flour are uniformly mixed while stirring them ordinarily for from 0.5 to 10 minutes, and preferably for from 1 to 5 minutes over low heat. The heating temperature is ordinarily from 50 to 200°C, and preferably from 70 to 150°C.

The wheat flour used for preparation of the sauce composition according to the present invention is not particularly limited, and ordinary wheat flour used as food can be used. Specific examples of the above-described wheat flour include strong flour, medium-strength flour, weak flour, wheat starch, and whole wheat flour, or a mixture of thereof, but medium-strength flour and/or weak flour is preferred, and weak flour is further preferred. As the above-described wheat flour, a commercial item can be used.

The butter used for preparation of the sauce composition according to the present invention is preferably produced using cow's milk as a raw material. The above-described butter may contain kitchen salt or may be salt-free, but salt-free butter is preferred. As the above-described butter, a commercial item can be used.

The cow's milk is preferably added after hot mixing of the wheat flour and the butter, and thus subjected to hot mixing with the wheat flour and the butter. The amount of the cow's milk to be added thereto is preferably from 500 to 1,500 parts by mass, more preferably from 700 to 1,300 parts by mass, and more preferably from 800 to 1,200 parts by mass with respect to 100 parts by mass of the above-described wheat flour. A temperature of the cow's milk upon addition is not particularly limited, but preferably from 10 to 90°C, and more preferably from 30 to 80°C. In order to further suppress generation of lumps, the cow's milk is preferably added thereto little by little while hot mixing of the mixture. Heating time and heating temperature are not particularly limited, but the mixture is preferably subjected to hot mixing over from low heat to medium heat with avoiding scorching of ingredients, to a degree in which the cow's milk is concentrated to from 60 to 98% by mass, and more preferably from 70 to 95% by mass with respect to the amount of cow's milk before heating the cow's milk. Accordingly, the heating temperature is preferably from 50 to 200°C, and further preferably from 70 to 150°C, and the heating time is preferably from 3 to 120 minutes, more preferably from 5 to 60 minutes, and more preferably from 7 to 30 minutes.

The cow's milk used for preparation of the sauce composition according to the present invention is not particularly limited, and may be a composition-adjusted one or whole one. As the above-described cow's milk, a commercial item can be used.

The sauce composition according to the present invention is preferably salted mainly with sodium chloride.

In the production of the sauce composition according to the present invention, the amount of the sodium chloride to be blended in is preferably from 1 to 13 parts by mass, more preferably from 1.5 to 11 parts by mass, and more preferably from 2.5 to 7 parts by mass with respect to 100 parts by mass of the wheat flour to be blended in. This sodium chloride also includes sodium chloride contained in the above-described butter.

In the preparation of the sauce composition according to the present invention, as long as the sodium chloride is uniformly dissolved into the sauce composition, timing of adding the sodium chloride is not particularly limited. The sodium chloride may be added thereto at any one of stages, for example, upon frying the wheat flour with the butter, upon adding the cow's milk to fried wheat flour with butter, upon hot mixing of added cow's milk, and after hot mixing of the added cow's milk. In a case where the sodium chloride is added after hot mixing of the added cow's milk, the sodium chloride may be subjected to hot mixing with remaining heat, or the sodium chloride may be mixed while heating the resultant mixture. Moreover, the sodium chloride may be divided into small portions and then added thereto little by little.

As the sodium chloride, a commercial item can be used. Moreover, native salt or the like may be used as the sodium chloride.

The sauce composition according to the present invention preferably further contains potassium chloride. When the composition contains the potassium chloride, generation of lumps in the sauce composition can be further suppressed. Moreover, the potassium chloride also has a salty taste, and therefore when the potassium chloride is added thereto, a desired salty taste can be imparted using a less amount of sodium chloride, and thus an intake of sodium salt can be suppressed.

In the preparation of the sauce composition according to the present invention, the amount of the potassium chloride to be blended in is preferably from 0 to 10 parts by mass, more preferably from 1 to 8 parts by mass, and more preferably from 3 to 7 parts by mass with respect to 100 parts by mass of the wheat flour to be blended in.

In the preparation of the sauce composition according to the present invention, as long as the potassium chloride is uniformly dissolved into the sauce composition, timing of adding the potassium chloride is not particularly limited. The potassium chloride may be added thereto at any one of stages, for example, upon frying the wheat flour with the butter, upon adding the cow's milk to fried wheat flour with the butter, upon hot mixing of added cow's milk, and after hot mixing of the added cow's milk. In a case where the potassium chloride is added after hot mixing of the added cow's milk, the potassium chloride may be subjected to hot mixing with remaining heat, or the sodium chloride may be mixed while heating the resultant mixture. Moreover, the potassium chloride may be divided into small portions and then added thereto little by little.

The sauce composition according to the present invention contains aspartic acid and/or a salt thereof. The aspartic acid and the salt thereof are effective in suppressing generation of lumps of wheat flour, and also effective in further smoothing the food texture of the sauce composition.

As the aspartic acid and the salt thereof, aspartic acid, sodium aspartate, or potassium aspartate is preferred, and sodium aspartate is particularly preferred. Moreover, two or more kinds selected from aspartic acid and salts thereof may be combined and used.

The above-described salt of aspartic acid is not particularly limited, and may be a salt in which either one of two carboxyl groups of aspartic acid is substituted by an alkali metal or the like, a salt in which both of two carboxyl groups of aspartic acid are substituted by alkali metals or the like, or a mixture thereof. Moreover, the aspartic acid and the salt thereof may be a D-isomer, an L-isomer, or a mixture thereof, but preferably an L-isomer.

In the preparation of the sauce composition according to the present invention, the amount of the aspartic acid and/or the salt thereof to be blended in is preferably from 0.1 to 0.45 part by mass, more preferably from 0.2 to 0.42 part by mass, and more preferably from 0.26 to 0.4 part by mass with respect to 100 parts by mass of the wheat flour to be blended in.

In the preparation of the sauce composition according to the present invention, as long as the aspartic acid and/or the salt thereof are uniformly dissolved into the sauce composition, timing of adding the aspartic acid and/or the salt thereof is not particularly limited. The aspartic acid and/or the salt thereof may be added thereto at any one of stages, for example, upon frying the wheat flour with the butter, upon adding the cow's milk to fried wheat flour with butter, upon hot mixing of added cow's milk, and after hot mixing of the added cow's milk. In the case where the aspartic acid and/or the salt thereof is added after hot mixing of the added cow's milk, the aspartic acid and/or the salt thereof may be subjected to hot mixing with remaining heat, or the aspartic acid and/or the salt thereof may be mixed while heating the resultant mixture. Moreover, the aspartic acid and/or the salt thereof may be divided into small portions and then added thereto little by little.

In the preparation of the sauce composition according to the present invention, the order of adding the above-described sodium chloride, potassium chloride, and aspartic acid and/or the salt thereof is not particularly limited. Moreover, the above-described sodium chloride, potassium chloride, and aspartic acid and/or the salt thereof may be simultaneously added thereto.

The sauce composition according to the present invention may further contain inorganic salts other than sodium chloride and potassium chloride, a flavor enriching agent such as natural seasoning, bouillon, amino acid (except for aspartic acid and the salt thereof), saccharides and organic acid, a natural product such as spice, a herb and sesame, or a vitamin, an anticaking agent, an antioxidant, a color former, a coloring agent, an emulsifier, an extending agent, a fluidizing agent or a quality improver. In the production of the sauce composition according to the present invention, timing of adding these components is not particularly limited. These components can be added thereto at desired timing for any purpose.

The mass of the sauce composition produced as mentioned above is preferably adjusted to be from 30 to 98% by mass, more preferably from 40 to 95% by mass, and more preferably from 60 to 90% by mass with respect to the total amount of charge of blended raw materials.

A form of the sauce composition according to the present invention is not particularly limited, and specific examples include paste and a roux. The sauce composition according to the present invention also includes one subjected to further processing of a prepared sauce composition as described above in order to process the composition into a desirable form.

The sauce composition according to the present invention can be used, for example, as a bechamel sauce, a white sauce or a mix thereof, a cream stew sauce or a mix thereof, a chowder sauce or a mix thereof, a gratin sauce or a mix thereof, a cream pasta sauce or a mix thereof, a lasagna sauce or a mix thereof, or a doria sauce or a mix thereof.

For example, a stew, a gratin, a cream croquette, doria, pasta or the like can be cooked using the sauce composition according to the present invention.

Moreover, a ingredient is added to the sauce composition according to the present invention, and thus various kinds of sauces can be made. For example, cheese is added thereto to make a mornay sauce, or tomato puree is added thereto to make an aurora sauce, or the like.

The sauce composition according to the present invention has a good gluten flavor and deep taste in harmony with the sauce, and also has smoother food texture.

Subsequently, the use of aspartic acid or a salt thereof for suppressing lumps according to the present invention is described.

The use of aspartic acid or a salt thereof for suppressing lumps according to the present invention is a method of suppressing formation of lumps derived from gluten in the production of a gluten-containing sauce composition. The use of aspartic acid or a salt thereof for suppressing lumps according to the present invention includes blending in aspartic acid in a step for producing the gluten-containing sauce composition.

The gluten in the sauce composition in which formation of the lumps is suppressed by the use of aspartic acid or a salt thereof for suppressing lumps according to the present invention is incorporated in the sauce composition by blending in gluten-containing grain, for example, wheat flour. In this case, the amount of the aspartic acid and/or the salt thereof to be blended in is preferably from 0.1 to 0.45 part by mass, more preferably from 0.2 to 0.42 part by mass, and more preferably from 0.26 to 0.4 part by mass with respect to 100 parts by mass of the wheat flour to be blended in.

The sauce composition in which formation of lumps is suppressed by the use of aspartic acid or a salt thereof for suppressing lumps according to the present invention contains sodium in an amount of preferably from 5 to 65 parts by mass, more preferably from 5 to 45 parts by mass, more preferably from 8 to 45 parts by mass, more preferably from 15 to 45 parts by mass, and more preferably from 16 to 29 parts by mass with respect to 100 parts by mass of the gluten, from viewpoints of an improvement in food texture, a taste and a flavor, and an improvement in richness or a flavor balance. A definition and derivation of the sodium contained in the sauce composition are the same as described in the explanation of the above-mentioned sauce composition according to the present invention.

Moreover, the sauce composition in which formation of lumps is suppressed by the use of aspartic acid or a salt thereof for suppressing lumps according to the present invention contains casein in an amount of preferably from 130 to 550 parts by mass, more preferably from 130 to 530 parts by mass, more preferably from 130 to 400 parts by mass, more preferably from 180 to 350 parts by mass, and more preferably from 200 to 320 parts by mass with respect to 100 parts by mass of the gluten, from a viewpoint of an improvement in a taste and a flavor.

Moreover, the sauce composition in which formation of lumps is suppressed by the use of aspartic acid or a salt thereof for suppressing lumps according to the present invention contains potassium in an amount of preferably from10 to 75 parts by mass, more preferably from 10 to 65 parts by mass, more preferably from 12 to 65 parts by mass, more preferably from 16 to 55 parts by mass, and more preferably from 37 to 54 parts by mass with respect to 100 parts by mass of the gluten, from a viewpoint of an improvement in food texture, a taste and a flavor. A definition and derivation of the potassium contained in the sauce composition are the same as described in the above-described explanation of the sauce composition according to the present invention.

In the use of aspartic acid or a salt thereof for suppressing lumps according to the present invention, from viewpoints of an improvement in food texture, a taste or a flavor of the sauce composition, suppression of a foreign taste derived from potassium, suppression of a butyric acid smell, and an improvement in richness or a flavor balance, the amount of the aspartic acid blended in is preferably from 0.7 to 4 parts by mass, more preferably from 0.9 to 4 parts by mass, more preferably from 1.5 to 3.9 parts by mass, more preferably from 1.8 to 3.5 parts by mass, more preferably from 2.2 to 3.35 parts by mass, more preferably from 2.2 to 2.9 parts by mass, and more preferably from 2.4 to 2.9 parts by mass with respect to 100 parts by mass of the gluten. A definition and derivation of the aspartic acid to be blended in are the same as described in the above-mentioned explanation of the sauce composition according to the present invention.

In the sauce composition in which formation of lumps is suppressed by the use of aspartic acid or a salt thereof for suppressing lumps according to the present invention, from viewpoints of an improvement in food texture, a taste and a flavor, the content of sodium amounts to preferably from 0.15 to 0.75 part by mass, and more preferably from 0.38 to 0.75 parts by mass of 1 part by mass of a total content of sodium (Na) and potassium (K) (Na / (Na + K)). Moreover, if a viewpoint of reducing an intake of sodium is also taken into consideration, the content of sodium described above is also preferably from 0.2 to 0.45 part by mass. The definition and the derivation of the potassium contained in the sauce composition are the same as described in the explanation of the above-mentioned sauce composition according to the present invention.

A preferred embodiment of the use of aspartic acid or a salt thereof for suppressing lumps according to the present invention is in accordance with the above-mentioned example of the method for preparing the sauce composition according to the present invention. More specifically, the preferred embodiment preferably includes a step of hot mixing of at least wheat flour, butter, cow's milk, sodium chloride, and aspartic acid and/or the salt thereof, and optionally, potassium chloride, and homogenization of the resultant mixture. The amount of each ingredient blended in, and blending timing are also similar to the conditions in the above-mentioned example of the method of producing the sauce composition according to the present invention. Moreover, in the production of the sauce composition relating to the use of aspartic acid or a salt thereof for suppressing lumps according to the present invention, such ingredients may be blended in as inorganic salts other than sodium chloride and potassium chloride, a flavor enriching agent such as natural seasoning, bouillon, amino acid (except for aspartic acid and the salt thereof), saccharides and organic acid, a natural product such as spice, a herb and sesame, or a vitamin, an anticaking agent, an antioxidant, a color former, a coloring agent, an emulsifier, an extending agent, a fluidizing agent or a quality improver.

The sauce composition in which formation of lumps is suppressed by the use of aspartic acid or a salt thereof for suppressing lumps according to the present invention can be used, for example, as a bechamel sauce, a white sauce or a mix thereof, a cream stew sauce or a mix thereof, a chowder sauce or a mix thereof, a gratin sauce or a mix thereof, a cream pasta sauce or a mix thereof, a lasagna sauce or a mix thereof, or a doria sauce or a mix thereof.

Subsequently, a production method according to the present invention is described.

The production method according to the present invention is a method of producing a gluten-containing sauce composition, and the method includes blending in from 1 to 15 parts by mass of sodium chloride, and from 0.1 to 0.45 part by mass of aspartic acid and/or a salt thereof, with respect to 100 parts by mass of wheat flour. In the production method according to the present invention, each raw material is preferably blended in according to formulation similar to the one in the above-mentioned example of preparation of the sauce composition.

With regard to the above-mentioned embodiments, the present invention further discloses the following compositions or methods.
<1> A sauce composition containing gluten, sodium, and aspartic acid, wherein the content of the sodium is from 5 to 65 parts by mass with respect to 100 parts by mass of the gluten, and the content of the aspartic acid is from 0.7 to 4 parts by mass with respect to 100 parts by mass of the gluten.
<2> The sauce composition according to <1>, wherein the content of the sodium is from 5 to 45 parts by mass, preferably from 8 to 45 parts by mass, more preferably from 15 to 45 parts by mass, more preferably from 16 to 29 parts by mass with respect to 100 parts by mass of the gluten.
<3> The sauce composition according to <1> or <2>, wherein the content of the aspartic acid is from 0.9 to 4 parts by mass, preferably from 1.5 to 3.9 parts by mass, more preferably from 1.8 to 3.5 parts by mass, more preferably from 2.2 to 3.35 parts by mass, more preferably from 2.2 to 2.9 parts by mass, more preferably from 2.4 to 2.9 parts by mass with respect to 100 parts by mass of the gluten.
<4> The sauce composition according to any one of <1> to <3>, wherein the sauce composition contains casein, and the content of the casein is from 130 to 550 parts by mass, preferably from 130 to 530 parts by mass, more preferably from 130 to 400 parts by mass, more preferably from 180 to 350 parts by mass, more preferably from 200 to 320 parts by mass with respect to 100 parts by mass of the gluten.
<5> The sauce composition according to any one of <1> to <4>, wherein the sauce composition contains potassium, and the content of the potassium is from 10 to 75 parts by mass, preferably from 10 to 65 parts by mass, more preferably from 12 to 65 parts by mass, more preferably from 16 to 55 parts by mass, more preferably from 37 to 54 parts by mass with respect to 100 parts by mass of the gluten.
<6> The sauce composition according to any one of <1> to <5>, wherein the content of the sodium amounts to from 0.15 to 0.75 part by mass, preferably from 0.38 to 0.75 parts by mass of 1 part by mass of the total content of the sodium and the potassium.
<7> The sauce composition according to any one of <1> to <5>, wherein the content of the sodium amounts to from 0.2 to 0.45 parts by mass of 1 part by mass of the total content of the sodium and the potassium.
<8> The sauce composition according to any one of <1> to <7>, wherein the aspartic acid is derived from sodium aspartate.
<9> The sauce composition according to any one of <1> to <8>, wherein the sauce composition is a composition selected from a bechamel sauce, a white sauce or a mix thereof, a cream stew sauce or a mix thereof, a chowder sauce or a mix thereof, a gratin sauce or a mix thereof, a cream pasta sauce or a mix thereof, a lasagna sauce or a mix thereof, and a doria sauce or a mix thereof.
<10> The sauce composition according to any one of <1> to <9>, wherein at least wheat flour, butter, cow's milk, sodium chloride, and aspartic acid and/or a salt thereof are blended in the sauce composition.
<11> The sauce composition according to <10>, wherein the blending amount of the butter is from 50 to 150 parts by mass, preferably from 70 to 130 parts by mass, more preferably from 80 to 120 parts by mass with respect to 100 parts by mass of the blending amount of the wheat flour.
<12> The sauce composition according to <10> or <11>, wherein the blending amount of the cow's milk is from 500 to 1500 parts by mass, preferably from 700 to 1300 parts by mass, more preferably from 800 to 1200 parts by mass with respect to 100 parts by mass of the blending amount of the wheat flour.
<13> The sauce composition according to any one of <10> to <12>, wherein the blending amount of the sodium chloride is from 1 to 13 parts by mass, preferably from 1.5 to 11 parts by mass, more preferably from 2.5 to 7 parts by mass with respect to 100 parts by mass of the blending amount of the wheat flour.
<14> The sauce composition according to any one of <10> to <13>, wherein the blending amount of the aspartic acid and/or the salt thereof is from 0.1 to 0.45 parts by mass, preferably from 0.2 to 0.42 parts by mass, more preferably from 0.26 to 0.4 parts by mass with respect to 100 parts by mass of the blending amount of the wheat flour.
<15> The sauce composition according to any one of <10> to <14>, wherein potassium chloride is blended in the sauce composition.
<16> The sauce composition according to any one of <10> to <15>, wherein the blending amount of the potassium chloride is from 0 to 10 parts by mass, preferably from 1 to 8 parts by mass, more preferably from 3 to 7 parts by mass with respect to 100 parts by mass of the blending amount of the wheat flour.
<17> Use of aspartic acid or a salt thereof for suppressing lumps, including blending in aspartic acid in the production of a gluten-containing sauce composition.
<18> The use of aspartic acid or a salt thereof for suppressing lumps according to <17>, wherein the blending amount of the aspartic acid is from 0.7 to 4 parts by mass, preferably from 0.9 to 4 parts by mass, more preferably from 1.5 to 3.9 parts by mass, more preferably from 1.8 to 3.5 parts by mass, more preferably from 2.2 to 3.35 parts by mass, more preferably from 2,2 to 2.9 parts by mass, more preferably from 2.4 to 2.9 parts by mass with respect to 100 parts by mass of the gluten.
<19> The use of aspartic acid or a salt thereof for suppressing lumps according to <17> or <18>, wherein the content of sodium in the sauce composition is from 5 to 65 parts by mass, preferably from 5 to 45 parts by mass, more preferably from 8 to 45 parts by mass, more preferably from 15 to 45 parts by mass, more preferably from 16 to 29 parts by mass with respect to 100 parts by mass of the gluten.
<20> The use of aspartic acid or a salt thereof for suppressing lumps according to any one of <17> to <19>, wherein the content of casein in the sauce composition is from 130 to 550 parts by mass, preferably from 130 to 530 parts by mass, more preferably from 130 to 400 parts by mass, more preferably from 180 to 350 parts by mass, more preferably from 200 to 320 parts by mass with respect to 100 parts by mass of the gluten.
<21> The use of aspartic acid or a salt thereof for suppressing lumps according to any one of <17> to <20>, wherein the content of potassium in the sauce composition is from 10 to 75 parts by mass, preferably from 10 to 65 parts by mass, more preferably from 12 to 65 parts by mass, more preferably from 16 to 55 parts by mass, more preferably from 37 to 54 parts by mass with respect to 100 parts by mass of the gluten.
<22> The use of aspartic acid or a salt thereof for suppressing lumps according to any one of <17> to <21>, wherein the content of the sodium amounts to from 0.15 to 0.75 part by mass, preferably from 0.38 to 0.75 parts by mass of 1 part by mass of the total content of the sodium and the potassium in the sauce composition.
<23> The use of aspartic acid or a salt thereof for suppressing lumps according to any one of <17> to <22>, wherein the content of the sodium amounts to from 0.2 to 0.45 parts by mass of 1 part by mass of the total content of the sodium and the potassium in the sauce composition.
<24> The use of aspartic acid or a salt thereof for suppressing lumps according to any one of <17> to <23>, wherein the aspartic acid is blended in by blending in aspartic acid and/or a salt thereof.
<25> The use of aspartic acid or a salt thereof for suppressing lumps according to any one of <17> to <24>, wherein the sauce composition is a composition selected from a bechamel sauce, a white sauce or a mix thereof, a cream stew sauce or a mix thereof, a chowder sauce or a mix thereof, a gratin sauce or a mix thereof, a cream pasta sauce or a mix thereof, a lasagna sauce or a mix thereof, and a doria sauce or a mix thereof.
<26> The use of aspartic acid or a salt thereof for suppressing lumps according to any one of <17> to <25>, wherein the sauce composition contains wheat flour, butter, cow's milk and sodium chloride.
<27> The use of aspartic acid or a salt thereof for suppressing lumps according to <26>, wherein the sauce composition is a composition prepared by blending in the butter in an amount of from 50 to 150 parts by mass, preferably from 70 to 130 parts by mass, more preferably from 80 to 120 parts by mass with respect to 100 parts by mass of the wheat flour.
<28> The use of aspartic acid or a salt thereof for suppressing lumps according to <26> or <27>, wherein the sauce composition is a composition prepared by blending in the cow's milk in an amount of from 500 to 1500 parts by mass, preferably from 700 to 1300 parts by mass, more preferably from 800 to 1200 parts by mass with respect to 100 parts by mass of the wheat flour.
<29> The use of aspartic acid or a salt thereof for suppressing lumps according to any one of <26> to <28>, wherein the sauce composition is a composition prepared by blending in the sodium chloride in an amount of from 1 to 13 parts by mass, preferably from 1.5 to 11 parts by mass, more preferably from 2.5 to 7 parts by mass with respect to 100 parts by mass of the wheat flour.
<30> The use of aspartic acid or a salt thereof for suppressing lumps according to any one of <26> to <29>, wherein the sauce composition contains potassium chloride.
<31> The use of aspartic acid or a salt thereof for suppressing lumps according to any one of <26> to <30>, wherein the sauce composition is a composition prepared by blending in the potassium chloride in an amount of from 0 to 10 parts by mass, preferably from 1 to 8 parts by mass, more preferably from 3 to 7 parts by mass with respect to 100 parts by mass of the wheat flour.
<32> A method of producing gluten-containing sauce composition, wherein the method includes blending in sodium chloride in an amount of from 1 to 15 parts by mass, and an aspartic acid and/or a salt thereof in an amount of 0.1 to 0.45 parts by mass, with respect to 100 parts by mass of wheat flour.
<33> The production method according to <32>, wherein the method includes blending in the sodium chloride in an amount of from 1 to 13 parts by mass, preferably from 1.5 to 11 parts by mass, more preferably from 2.5 to 7 parts by mass with respect to 100 parts by mass of the wheat flour.
<34> The production method according to <32> or <33>, wherein the method includes blending in the aspartic acid and/or a salt thereof in an amount of from 0.2 to 0.42 parts by mass, preferably from 0.26 to 0.4 parts by mass with respect to 100 parts by mass of the wheat flour.
<35> The production method according to any one of <32> to <34>, wherein the method includes blending in butter in an amount of from 50 to 150 parts by mass, preferably from 70 to 130 parts by mass, more preferably from 80 to 120 parts by mass with respect to 100 parts by mass of the wheat flour.
<36> The production method according to any one of <32> to <35>, wherein the method includes blending in cow's milk in an amount of from 500 to 1500 parts by mass, preferably from 700 to 1300 parts by mass, more preferably from 800 to 1200 parts by mass with respect to 100 parts by mass of the wheat flour.
<37> The production method according to any one of <32> to <36>, wherein the method includes blending in potassium chloride.
<38> The production method according to any one of <32> to <37>, wherein the method includes blending in the potassium chloride in an amount of from 0 to 10 parts by mass, preferably from 1 to 8 parts by mass, more preferably from 3 to 7 parts by mass with respect to 100 parts by mass of the wheat flour.

### Examples

Hereinafter, the present invention is described more in detail with reference to Examples, but the present invention is not limited thereto.

### [Analysis of aspartic acid]

To 10 g of a sauce composition, 10 g of distilled water was added, and the resultant mixture was homogenized under conditions of 10,000 rpm for 5 minutes using a homogenizer (ULTRA DISPERSER LK-22, manufactured by YAMATO SCIENTIFIC CO., LTD.). The resultant homogenized solution was centrifuged under conditions of 3,000 rpm at 4°C for 30 minutes using a centrifugal separator (CF7D2, manufactured by Hitachi, Ltd.), and 3 mL of the resultant supernatant was diluted with 0.02 N hydrochloric acid to a constant volume of 100 mL to prepare a sample. The sample was measured using an amino acid analyzer (Hitachi L-8800).

### [Analysis of Na and K]

To 10 g of a sauce composition, 10 g of distilled water was added, and the resultant mixture was homogenized under conditions of 10,000 rpm for 5 minutes using a homogenizer (ULTRA DISPERSER LK-22, manufactured by YAMATO SCIENTIFIC CO., LTD.). The resultant homogenized solution was centrifuged under conditions of 3,000 rpm at 4°C for 30 minutes using a centrifugal separator (CF7D2, manufactured by Hitachi, Ltd.), and 3 mL of the resultant supernatant was diluted with 0.02 N hydrochloric acid to a constant volume of 100 mL to prepare a sample. The sample was measured using an atomic absorption spectrophotometer (Polarized Zeeman Atomic Absorption Spectrophotometer, Hitachi Z-6100).

### [Analysis of gluten]

An amount of gluten in a sauce composition was measured by the following method using a Morinaga FASPEK milk assay kit (gliadin).

A sauce composition was milled and homogenized using a mixer. Then, 1 g of the resultant homogenized specimen was taken into a 50 mL-volume centrifuging tube made from polypropylene, 19 mL of specimen extraction liquid (a solution prepared by mixing at a ratio of a specimen diluent attached to the assay kit: extraction A solution: extraction B solution: purified water = 1 : 1 : 1 : 17) was added thereto, the resultant mixture was sufficiently shaken up and mixed, and then shaken under conditions of 90 to 110 double strokes per minute, room temperature, and a shaking width of about 3 cm for 12 hours or more. Then, pH of an extract was adjusted to be near neutrality (pH: 6.0 to 8.0), and the resultant liquid was centrifuged at 3,000 rpm at room temperature for 20 minutes, and thus a supernatant was fractionated. This supernatant was diluted 20 times on a volume basis using a specimen diluent I attached to the assay kit (one prepared by diluting a specimen diluent attached to the assay kit 20 times using purified water). Further, one diluted using the specimen diluent I was diluted 8,000 times to 160,000 times on a volume basis using a specimen diluent II for a gliadin concentration to be within the range of a standard solution (0.78 to 50 ng/mL) to prepare a solution for measurement.

A temperature of an antibody solid-phased plate attached to the assay kit was returned to room temperature and 100 µL of the solution for measurement was added to each well, and then the well was covered, and allowed to stand at room temperature for 1 hour. A solution in the well was completely removed, and washing was made 6 times using 250 to 300 µL of a washing liquid for each well. Then, 100 µL of an enzyme-labeled anti-gliadin antibody solution attached to the assay kit was dispensed into each well. The well was covered, and then allowed to stand at room temperature for 30 minutes, and then a solution in the well was completely removed. Washing was made 6 times using 250 to 300 µL of a washing liquid for each well, and 100 µL of an enzyme substrate solution attached to the assay kit was dispensed into each well. The well was covered, and allowed to stand at room temperature for 10 minutes under shielding light, and 100 µL of a reaction stopper attached to the assay kit was dispensed into each well. A plate reader was used, and absorbance was measured under conditions of a dominant wavelength of 450 nm and a complementary wavelength from 600 to 650 nm, and then a wheat gliadin concentration in the specimen was determined based on a standard curve prepared using the simultaneously measured absorbance of the standard solution. A gluten concentration was calculated from an expression: gliadin concentration x 85 / 33.

### [Analysis of casein]

An amount of casein in a sauce composition was measured by the following method using a Morinaga FASPEK milk assay kit (casein).

A sauce composition was milled and homogenized using a mixer or the like. Then, 1 g of the resultant homogenized specimen was taken to a 50 mL-volume centrifuging tube made from polypropylene, 19 mL of specimen extraction liquid (a solution prepared by mixing at a ratio of a specimen diluent attached to the assay kit: extraction A solution: extraction B solution: purified water = 1 : 1 : 1 : 17) was added thereto, the resultant mixture was sufficiently shaken up and mixed, and shaken under conditions of 90 to 110 double strokes per minute, room temperature, and a shaking width of about 3 cm for 12 hours or more. Then, pH of an extract was adjusted to be near neutrality (pH: 6.0 to 8.0), and the resultant liquid was centrifuged at 3,000 rpm at room temperature for 20 minutes, and a supernatant was fractionated. This supernatant was diluted 20 times on a volume basis using a specimen diluent I attached to the assay kit (one prepared by diluting a specimen diluent attached to the assay kit 20 times using purified water). Further, one diluted using the specimen diluent I was diluted 160,000 times to 3,200,000 times on a volume basis using a specimen diluent II for a casein concentration to be within the range of a standard solution (0.78 to 50 ng/mL) to prepare a solution for measurement.

A temperature of an antibody solid-phased plate attached to the assay kit was returned to room temperature and 100 µL of the solution for measurement was added to each well, and then the well was covered, and allowed to stand at room temperature for 1 hour. A solution in the well was completely removed, and washing was made 6 times using 250 to 300 µL of a washing liquid for each well. Then, 100 µL of an enzyme-labeled anti-casein antibody solution attached to the assay kit was dispensed into each well. The well was covered, and then allowed to stand for 30 minutes at room temperature, and then a solution in the well was completely removed. Washing was made 6 times using 250 to 300 µL of a washing liquid for each well, and 100 µL of an enzyme substrate solution attached to the assay kit was dispensed into each well. The well was covered, and allowed to stand at room temperature for 10 minutes under shielding light, and 100 µL of a reaction stopper attached to the assay kit was dispensed into each well. A plate reader was used, and absorbance was measured under conditions of a dominant wavelength of 450 nm and a complementary wavelength from 600 to 650 nm, and then a casein concentration in the specimen was determined based on a standard curve prepared using the simultaneously measured absorbance of the standard solution.

### [Production Example 1] Production of a sauce composition (bechamel sauce)

Into a pan, 50 g of wheat flour (weak flour, manufactured by Nisshin Seifun Group Inc.) sieved through a 16 mesh and 50 g of salt-free butter (manufactured by Snow Brand Milk Products Co., Ltd.) were put, and the resultant mixture was fried over low heat for 2 minutes while stirring with avoiding scorching of the mixture. Next, 500 g of cow's milk (manufactured by Meiji Dairies Corporation) at an ordinary temperature was gradually added thereto, and the resultant mixture was stirred for 5 minutes, and then further stirred for 2 minutes over medium heat by increasing the heat. Then, the resultant mixture was stirred for 2 minutes over low heat by decreasing the heat, and then sodium chloride (NaCl, manufactured by Wako Pure Chemical Industries, Ltd.), potassium chloride (KCI, manufactured by Wako Pure Chemical Industries, Ltd.), and sodium aspartate (L-isomer, Asp-Na, manufactured by Wako Pure Chemical Industries, Ltd.) in amounts presented in Table 1 below were added thereto, and the resultant mixture was continuously stirred for 1 minute while cooking over low heat, and thus 31 kinds of sauce compositions having different compositions were obtained. Water evaporated in a process for producing the sauce composition, and the sauce composition obtained kept 90% by mass as compared to the initial charge amount.

Among the above-described 31 kinds of sauce compositions, ones covered by the sauce composition according to the present invention were refer to as Present Inventions (1) to (19), and ones not covered were refer to as Comparative Products (1) to (12). One obtained by cooling each sauce composition to 25°C was used for testing as mentioned below.

**Table 1**

| Sauce composition | Blending amount (g) | | | | Amount (parts by mass) with respect to 100 parts by mass of wheat flour | | | |
|---|---|---|---|---|---|---|---|---|
| | NaCl | KCl | Asp-Na | Total | NaCl | KCl | Asp-Na | Total |
| Present invention (1) | 2.88 | 1.92 | 0.20 | 5.00 | 5.76 | 3.84 | 0.40 | 10.00 |
| Present invention (2) | 2.90 | 1.93 | 0.18 | 5.00 | 5.80 | 3.86 | 0.36 | 10.00 |
| Present invention (3) | 2.91 | 1.94 | 0.15 | 5.00 | 5.82 | 3.88 | 0.30 | 10.00 |
| Present invention (4) | 2.93 | 1.95 | 0.13 | 5.00 | 5.86 | 3.90 | 0.26 | 10.00 |
| Present invention (5) | 2.94 | 1.96 | 0.10 | 5.00 | 5.88 | 3.92 | 0.20 | 10.00 |
| Present invention (6) | 2.96 | 1.97 | 0.08 | 5.00 | 5.92 | 3.94 | 0.16 | 10.00 |
| Present invention (7) | 2.97 | 1.98 | 0.05 | 5.00 | 5.94 | 3.96 | 0.10 | 10.00 |
| Present invention (8) | 1.46 | 3.40 | 0.15 | 5.00 | 2.92 | 6.80 | 0.30 | 10.00 |
| Present invention (9) | 3.64 | 1.21 | 0.15 | 5.00 | 7.28 | 2.42 | 0.30 | 10.00 |
| Present invention (10) | 3.88 | 0.97 | 0.15 | 5.00 | 7.76 | 1.94 | 0.30 | 10.00 |
| Present invention (11) | 4.85 | 0.00 | 0.15 | 5.00 | 9.70 | 0.00 | 0.30 | 10.00 |
| Present invention (12) | 3.84 | 0.96 | 0.20 | 5.00 | 7.68 | 1.92 | 0.40 | 10.00 |
| Present invention (13) | 1.44 | 3.36 | 0.20 | 5.00 | 2.88 | 6.72 | 0.40 | 10.00 |
| Present invention (14) | 4.95 | 0.00 | 0.05 | 5.00 | 9.90 | 0.00 | 0.10 | 10.00 |
| Present invention (15) | 3.96 | 0.99 | 0.05 | 5.00 | 7.92 | 1.98 | 0.10 | 10.00 |
| Present invention (16) | 1.49 | 3.47 | 0.05 | 5.00 | 2.98 | 6.94 | 0.10 | 10.00 |
| Present invention (17) | 7.00 | 4.06 | 0.24 | 11.30 | 14.00 | 8.12 | 0.48 | 22.60 |
| Present invention (18) | 6.00 | 3.46 | 0.24 | 9.70 | 12.00 | 6.92 | 0.48 | 19.40 |
| Present invention (19) | 1.49 | 3.48 | 0.04 | 5.01 | 2.98 | 6.96 | 0.08 | 10.02 |
| Comparative Product (1) | 5.00 | 0.00 | 0.00 | 5.00 | 10.00 | 0.00 | 0.00 | 10.00 |
| Comparative Product (2) | 0.00 | 5.00 | 0.00 | 5.00 | 0.00 | 10.00 | 0.00 | 10.00 |
| Comparative Product (3) | 3.00 | 2.00 | 0.00 | 5.00 | 6.00 | 4.00 | 0.00 | 10.00 |
| Comparative Product (4) | 3.98 | 1.00 | 0.03 | 5.00 | 7.96 | 2.00 | 0.06 | 10.00 |
| Comparative Product (5) | 1.49 | 3.48 | 0.03 | 5.00 | 2.98 | 6.96 | 0.06 | 10.00 |
| Comparative Product (6) | 4.75 | 0.00 | 0.25 | 5.00 | 9.50 | 0.00 | 0.50 | 10.00 |
| Comparative Product (7) | 2.85 | 1.90 | 0.25 | 5.00 | 5.70 | 3.80 | 0.50 | 10.00 |
| Comparative Product (8) | 0.00 | 4.85 | 0.15 | 5.00 | 0.00 | 9.70 | 0.30 | 10.00 |
| Comparative Product (9) | 7.00 | 0.00 | 0.00 | 7.00 | 14.00 | 0.00 | 0.00 | 14.00 |
| Comparative Product (10) | 0.00 | 4.06 | 0.00 | 4.06 | 0.00 | 8.12 | 0.00 | 8.12 |
| Comparative Product (11) | 7.00 | 4.06 | 0.00 | 11.06 | 14.00 | 8.12 | 0.00 | 22.12 |
| Comparative Product (12) | 7.00 | 4.06 | 0.32 | 11.38 | 14.00 | 8.12 | 0.64 | 22.76 |

### [Testing Example 1] Sensory evaluation of sauce compositions

With regard to each sauce composition obtained in the above-described Production Examples, food texture, a taste, a flavor, richness and a flavor balance were evaluated based on the following evaluation criteria, respectively. Numerical values of evaluation were determined after due consultation by three specialist panels. Table 2 below presents the results.

Evaluation criteria of food texture:
5: Almost no lumps, and very smooth food texture.
4: A small amount of lumps, and smooth food texture.
3: A somewhat small amount of lumps, and somewhat smooth food texture.
2: A somewhat large amount of lumps, and somewhat dry and crumbling food texture.
1: A large amount of lumps, and dry and crumbling food texture.

Evaluation criteria of taste:
4: No sense of a foreign taste derived from potassium.
3: Almost no sense of a foreign taste derived from potassium.
2: Presence of slight sense of a foreign taste derived from potassium.
1: Presence of sense of a foreign taste derived from potassium.

Evaluation criteria of flavor:
4: No sense of an unpleasant butyric acid smell.
3: Almost no sense of an unpleasant butyric acid smell.
2: Presence of slight sense of an unpleasant butyric acid smell.
1: Presence of sense of an unpleasant butyric acid smell.

Evaluation criteria of richness:
5: Presence of significantly strong sense of richness of milk.
4: Presence of strong sense of richness of milk.
3: Presence of sense of richness of milk.
2: Almost no sense of richness of milk.
1: No sense of richness of milk.

Flavor balance:
5: Very good flavor balance as a sauce.
4: Good flavor balance as a sauce.
3: Somewhat good flavor balance as a sauce.
2: Somewhat poor flavor balance as a sauce.
1: Poor flavor balance as a sauce.

The above-described "flavor balance" refers to a degree of harmonization of a flavor, a taste and thickness.

Table 2 below presents the results. In addition, Table 2 simultaneously presents the content of aspartic acid (Asp), sodium (Na), potassium (K), and casein obtained by analysis according to the above-described analytical methods, and the ratio of Na in 1 part by mass of the total amount of Na and K (part by mass, Na / (Na + K)), and a mass of Asp with respect to a mass of Na (Asp/Na) as derived from these values.

**Table 2**

| Sauce composition | Amount (parts by mass) with respect to 100 parts by mass of gluten | | | | Na /(Na+K) | Asp /Na | Food texture | Taste | Flavor | Richness | Flavor balance |
|---|---|---|---|---|---|---|---|---|---|---|---|
| | Amount of Asp | Amount of Na | Amount of K | Amount of Casein | | | | | | | |
| Present invention (1) | 3.31 | 28.04 | 37.36 | 271.10 | 0.43 | 0.118 | 5 | 4 | 4 | 4 | 3.5 |
| Present invention (2) | 2.99 | 28.15 | 37.47 | 271.10 | 0.43 | 0.106 | 5 | 4 | 4 | 4 | 4.5 |
| Present invention (3) | 2.53 | 28.14 | 37.58 | 271.10 | 0.43 | 0.090 | 5 | 4 | 4 | 4 | 5 |
| Present invention (4) | 2.21 | 28.25 | 37.68 | 271.10 | 0.43 | 0.078 | 5 | 4 | 4 | 4 | 4.5 |
| Present invention (5) | 1.74 | 28.25 | 37.79 | 271.10 | 0.43 | 0.062 | 4 | 4 | 4 | 4 | 4 |
| Present invention (6) | 1.43 | 28.36 | 37.90 | 271.10 | 0.43 | 0.051 | 3 | 3 | 3 | 4 | 3.5 |
| Present invention (7) | 0.96 | 28.35 | 38.01 | 271.10 | 0.43 | 0.034 | 3 | 3 | 3 | 3.5 | 3.5 |
| Present invention (8) | 2.53 | 16.48 | 53.21 | 271.10 | 0.24 | 0.153 | 5 | 4 | 4 | 3 | 5 |
| Present invention (9) | 2.53 | 34.02 | 29.76 | 271.10 | 0.53 | 0.074 | 4 | 4 | 4 | 3.5 | 4.5 |
| Present invention (10) | 2.53 | 35.95 | 27.19 | 271.10 | 0.57 | 0.070 | 4 | 4 | 4 | 4 | 4.5 |
| Present invention (11) | 2.53 | 43.75 | 16.80 | 271.10 | 0.72 | 0.058 | 4 | 4 | 4 | 4 | 4 |
| Present invention (12) | 3.31 | 35.76 | 27.08 | 271.10 | 0.57 | 0.092 | 4 | 4 | 4 | 3.5 | 4 |
| Present invention (13) | 3.31 | 16.45 | 52.79 | 271.10 | 0.24 | 0.201 | 5 | 4 | 4 | 4 | 4.5 |
| Present invention (14) | 0.96 | 44.28 | 16.80 | 271.10 | 0.72 | 0.022 | 3 | 4 | 3 | 4.5 | 3.5 |
| Present invention (15) | 0.96 | 36.32 | 27.40 | 271.10 | 0.57 | 0.027 | 3 | 4 | 3 | 4 | 3.5 |
| Present invention (16) | 0.96 | 16.45 | 53.96 | 271.10 | 0.23 | 0.059 | 4 | 3 | 3 | 3 | 4 |
| Present invention (17) | 3.93 | 61.29 | 60.28 | 271.10 | 0.50 | 0.064 | 5 | 4 | 4 | 3 | 3 |
| Present invention (18) | 3.93 | 53.25 | 53.86 | 271.10 | 0.50 | 0.074 | 5 | 4 | 4 | 3.5 | 3 |
| Present invention (19) | 0.81 | 16.02 | 54.50 | 271.10 | 0.23 | 0.050 | 3 | 3 | 3 | 3.5 | 3 |
| Comparative product (1) | 0.18 | 44.55 | 16.80 | 271.10 | 0.73 | 0.004 | 1 | 4 | 1 | 1 | 3 |
| Comparative product (2) | 0.18 | 4.33 | 70.35 | 271.10 | 0.06 | 0.042 | 2 | 1 | 1 | 1 | 2 |
| Comparative product (3) | 0.18 | 28.46 | 38.22 | 271.10 | 0.43 | 0.006 | 3 | 2 | 1 | 2 | 3.5 |
| Comparative product (4) | 0.65 | 36.43 | 27.51 | 271.10 | 0.57 | 0.018 | 2 | 4 | 2 | 1 | 3.5 |
| Comparative product (5) | 0.65 | 16.39 | 54.07 | 271.10 | 0.23 | 0.040 | 3 | 2 | 2 | 2 | 3.5 |
| Comparative product (6) | *4.09* | 43.22 | 16.80 | 271.10 | 0.72 | 0.095 | 5 | 2 | 4 | 3 | 1.5 |
| Comparative product (7) | 4.09 | 27.93 | 37.15 | 271.10 | 0.43 | 0.146 | 5 | 2 | 4 | 3.5 | 1.5 |
| Comparative product (8) | 2.53 | 4.74 | 68.75 | 271.10 | 0.06 | 0.533 | 5 | 1 | 4 | 3 | 2 |
| Comparative product (9) | 0.18 | 60.64 | 16.80 | 271.10 | 0.78 | 0.003 | 1 | 4 | 1 | 3 | 2 |
| Comparative product (10) | 0.18 | 4.33 | 60.28 | 271.10 | 0.07 | 0.042 | 2 | 1 | 1 | 1 | 2 |
| Comparative product (11) | 0.18 | 60.64 | 60.28 | 271.10 | 0.50 | 0.003 | 1 | 2 | 1 | 2.5 | 2 |
| Comparative product (12) | 4.50 | 61.51 | 60.28 | 271.10 | 0.51 | 0.073 | 5 | 2 | 4 | 2.5 | 1 |

The results in Table 2 show that, when the content of aspartic acid in the sauce composition is low, a trend was found in which an amount of lumps increased, and food texture deteriorated. While this trend was improved by increasing a ratio of potassium to sodium, if the ratio of potassium increased, a trend of deterioration of the taste was recognized (see Comparative Products (1) to (5), and (9) to (11)).

Moreover, if the content of aspartic acid in the sauce composition was high, generation of lumps was virtually suppressed, but the taste and the flavor balance were poor (see Comparative Products (6), (7) and (12)).

Further, in the sauce composition in which the content of sodium is low, the taste was significantly poor (see Comparative Products (2), (8), and (10)), and when the content of aspartic acid is also low, all of the flavor, the richness, and the flavor balance were poor (see Comparative Products (2) and (10).).

On the other hand, in the sauce compositions of Present Inventions (1) to (19), all of the food texture, the taste, the flavor, the richness and the flavor balance were favorable.

### [Production Example 2] Production of white stew

To 150 g of the bechamel sauce prepared in Production Example 1, 125 g of cow's milk (manufactured by Meiji Diaries Corporation) and 100 g of water were added, and the resultant mixture was heated over medium heat until the whole was concentrated to be 325 g, and thus white stews 1 to 8 were obtained. Table 3 presents correspondence relationship between white stews 1 to 8 and the bechamel sauce used.

**Table 3**

| White stew | Blending amount (g) | | |
|---|---|---|---|
| | Bechamel sauce | Cow's milk | Water |
| Stew-1 | Present invention (17) 150g | 125 | 100 |
| Stew-2 | Present invention (18) 150g | 125 | 100 |
| Stew-3 | Present invention (7) 150g | 125 | 100 |
| Stew-4 | Present invention (19) 150g | 125 | 100 |
| Stew-5 | Comparative product (9) 150g | 125 | 100 |
| Stew-6 | Comparative product (10) 150g | 125 | 100 |
| Stew-7 | Comparative product (11) 150g | 125 | 100 |
| Stew-8 | Comparative product (12) 150g | 125 | 100 |

### [Testing Example 2] Sensory evaluation of white stews

With regard to the white stews obtained in the above-described Production Example 2, food texture, a taste, a flavor, and richness of the stews were evaluated based on the above-described evaluation criteria, respectively, and a flavor was evaluated based on evaluation criteria below. Numerical values of evaluation were determined after due consultation by three specialist panels. Table 4 below presents the results.

Flavor balance:
5: Very good flavor balance as a white stew.
4: Good flavor balance as a white stew.
3: Somewhat good flavor balance as a white stew.
2: Somewhat poor flavor balance as a white stew.
1: Poor flavor balance as a white stew.

The above-described "flavor balance" refers to a degree of harmonization of a flavor, a taste and thickness.

Table 4 presents the results. In addition, Table 4 simultaneously presents the content of sodium (Na), potassium (K), aspartic acid (Asp) and casein obtained by analysis according to the above-described analytical methods using the white stew as a specimen, and the ratio of Na in 1 part by mass of the total amount of Na and K (part by mass, Na / (Na + K)) as derived from these values, for reference.

**Table 4**

| White stew | Amount (parts by mass) with respect to 100 parts by mass of gluten | | | | Na /(Na+K) | Asp /Na | Food texture | Taste | Flavor | Richness | Flavor balance |
|---|---|---|---|---|---|---|---|---|---|---|---|
| | Amount of Asp | Amount of Na | Amount of K | Amount of Casein | | | | | | | |
| Stew-1 | 3.96 | 64.8 | 73.07 | 492.80 | 0.47 | 0.061 | 3 | 3 | 4 | 3 | 3 |
| Stew-2 | 3.96 | 56.7 | 66.65 | 492.80 | 0.46 | 0.070 | 4 | 3 | 4 | 3 | 3.5 |
| Stew-3 | 0.99 | 27.5 | 50.79 | 492.80 | 0.35 | 0.036 | 3.5 | 4 | 3.5 | 3 | 4 |
| Stew-4 | 0.83 | 19.5 | 67.29 | 492.80 | 0.22 | 0.043 | 4 | 3 | 3 | 3 | 4 |
| Stew-5 | 0.21 | 64.1 | 29.59 | 492.80 | 0.68 | 0.003 | 1 | 4 | 1 | 4 | 2 |
| Stew-6 | 0.21 | 7.8 | 73.07 | 492.80 | 0.10 | 0.027 | 2 | 1 | 2 | 1 | 1 |
| Stew-7 | 0.21 | 64.1 | 73.07 | 492.80 | 0.47 | 0.003 | 2 | 1 | 2 | 3 | 1 |
| Stew-8 | 4.50 | 65.0 | 73.07 | 492.80 | 0.47 | 0.069 | 4 | 2 | 4 | 3 | 2 |

Table 4 shows that, in the stews 5 to 7 prepared using bechamel sauces in which the content of aspartic acid was lower than the definition of the present invention, the food texture was poor under influence of lumps, and the flavor and the flavor balance were clearly poor. In the stew 8 prepared using a bechamel sauce in which the content of aspartic acid was higher than the definition of the present invention, the flavor balance was also poor.

On the other hand, in the white stews 1 to 4 prepared using bechamel sauces in which the content of sodium, potassium and aspartic acid was within the ranges defined in the present invention, all of the food texture, the taste, the flavor, the richness, and the flavor balance were favorable.

### [Production Example 3] Production of gratins

While 75 g of cow's milk (manufactured by Meiji Dairies Corporation) was added little by little to 150 g of the bechamel sauce prepared by the method in Production Example 1, the resultant mixture was subjected to hot mixing over medium heat, and the whole was adjusted to be 215 g. From the whole, 50 g was put into a heat-resistant dish, and heated in an oven (NE-N200, Panasonic Corporation) at 200°C for 5 minutes, and thus gratins 1 to 8 were obtained. Table 5 presents correspondence relationship with bechamel sauces used.

**Table 5**

| Gratin | Blending Amount (g) | |
|---|---|---|
| | Bechamel sauce | Cow's milk |
| Gratin 1 | Present invention (17) 150g | 75 |
| Gratin 2 | Present invention (18) 150g | 75 |
| Gratin 3 | Present invention (7) 150g | 75 |
| Gratin 4 | Present invention (19) 150g | 75 |
| Gratin 5 | Comparative product (9) 150g | 75 |
| Gratin 6 | Comparative product (10) 150g | 75 |
| Gratin 7 | Comparative product (11) 150g | 75 |
| Gratin 8 | Comparative product (12) 150g | 75 |

### [Testing Example 3] Sensory evaluation of gratins

With regard to the gratins obtained in the above-described Production Example 3, food texture, a taste, a flavor, and richness were evaluated based on the above-described evaluation criteria, respectively, and a flavor balance was evaluated based on evaluation criteria below. Numerical values of evaluation were determined after due consultation by three specialist panels. Table 6 below presents the results.

Flavor balance:
5: Very good flavor balance as a gratin.
4: Good flavor balance as a gratin.
3: Somewhat good flavor balance as a gratin.
2: Somewhat poor flavor balance as a gratin.
1: Poor flavor balance as a gratin.

The above-described "flavor balance" refers to a degree of harmonization of a flavor, a taste, and thickness.

Table 6 below presents the results. In addition, Table 6 simultaneously presents the content of sodium (Na), potassium (K), aspartic acid (Asp) and casein obtained by analysis according to the above-described analytical methods using the gratin as a specimen, and the ratio of Na in 1 part by mass of the total amount of Na and K (part by mass, Na / (Na + K)) as derived from these values, for reference.

**Table 6**

| Gratin | Amount (parts by mass) with respect to 100 parts by mass of gluten | | | | Na /(Na+K) | Asp /Na | Food texture | Taste | Flavor | Richness | Flavor balance |
|---|---|---|---|---|---|---|---|---|---|---|---|
| | Amount of Asp | Amount of Na | Amount of K | Amount of Casein | | | | | | | |
| Gratin 1 | 3.95 | 63.39 | 67.96 | 404.09 | 0.48 | 0.062 | 4 | 3.5 | 4 | 3 | 3 |
| Gratin 2 | 3.95 | 55.34 | 61.53 | 404.09 | 0.47 | 0.071 | 4 | 4 | 4 | 3.5 | 3.5 |
| Gratin 3 | 0.98 | 26.12 | 45.68 | 404.09 | 0.36 | 0.037 | 3 | 4 | 3.5 | 3 | 4 |
| Gratin 4 | 0.82 | 18.12 | 62.17 | 404.09 | 0.23 | 0.045 | 3 | 3 | 3 | 3 | 4 |
| Gratin 5 | 0.20 | 62.73 | 24.47 | 404.09 | 0.72 | 0.003 | 1 | 4 | 1 | 4 | 2 |
| Gratin 6 | 0.20 | 6.42 | 67.96 | 404.09 | 0.09 | 0.031 | 2 | 1 | 2 | 1 | 1 |
| Gratin 7 | 0.20 | 62.73 | 67.96 | 404.09 | 0.48 | 0.003 | 2 | 2 | 2 | 3 | 1 |
| Gratin 8 | 4.50 | 63.60 | 67.96 | 404.09 | 0.48 | 0.071 | 4 | 2 | 4 | 3 | 2 |

Table 6 shows that, in the gratins 5 to 7 prepared using bechamel sauces in which the content of aspartic acid was lower than the definition of the present invention, the food texture was poor under influence of lumps, and the flavor and the flavor balance were also clearly poor. In the gratin 8 prepared using a bechamel sauce in which the content of aspartic acid was higher than the definition of the present invention, the flavor balance was also poor.

On the other hand, in the gratins 1 to 4 prepared using bechamel sauces in which the content of sodium, potassium and aspartic acid was within the ranges defined in the present invention, all of the food texture, the taste, the flavor, the richness, and the flavor balance were favorable.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2011-067180 filed in Japan on March 25, 2011.

## Claims

1. A sauce composition comprising gluten, sodium, and aspartic acid, wherein the content of the sodium is from 5 to 65 parts by mass with respect to 100 parts by mass of the gluten, and the content of the aspartic acid is from 0.7 to 4 parts by mass with respect to 100 parts by mass of the gluten.

2. The sauce composition according to claim 1, wherein the sauce composition comprises casein, and the content of the casein is from 130 to 550 parts by mass with respect to 100 parts by mass of the gluten.

3. The sauce composition according to claim 1 or 2, wherein the content of the aspartic acid is from 2.2 to 3.35 parts by mass with respect to 100 parts by mass of the gluten.

4. The sauce composition according to any one of claims 1 to 3, wherein the content of the sodium is from 5 to 45 parts by mass with respect to 100 parts by mass of the gluten.

5. The sauce composition according to any one of claims 1 to 4, wherein the aspartic acid is derived from sodium aspartate.

6. The sauce composition according to any one of claims 1 to 5, wherein the sauce composition comprises potassium, and the content of the potassium is from 10 to 75 parts by mass with respect to 100 parts by mass of the gluten.

7. The sauce composition according to claim 6, wherein the content of the sodium amounts to from 0.38 to 0.75 parts by mass of 1 part by mass of the total content of the sodium and the potassium.

8. The sauce composition according to claim 6, wherein the content of the sodium amounts to from 0.2 to 0.45 parts by mass of 1 part by mass of the total content of the sodium and the potassium.

9. The sauce composition according to any one of claims 1 to 8, wherein the sauce composition is a composition selected from a bechamel sauce and a white sauce.

10. The sauce composition according to any one of claims 1 to 9, wherein at least wheat flour, butter, cow's milk, sodium chloride, and aspartic acid and/or a salt thereof are blended in the sauce composition.

11. The sauce composition according to claim 10, wherein the blending amount of the aspartic acid and/or the salt thereof is from 0.1 to 0.45 parts by mass with respect to 100 parts by mass of the blending amount of the wheat flour.

12. Use of the sauce composition according to any one of claims 1 to 8 as a bechamel sauce.

13. Use of aspartic acid or a salt thereof for suppressing lumps in the production of a gluten-containing sauce composition.

14. The use according to claim 13, comprising blending in the aspartic acid in an amount of from 0.7 to 4 parts by mass with respect to 100 parts by mass of the gluten.

15. A method of producing a gluten-containing sauce composition, comprising blending in sodium chloride in an amount of from 1 to 15 parts by mass, and an aspartic acid and/or a salt thereof in an amount of 0.1 to 0.45 parts by mass, with respect to 100 parts by mass of wheat flour.

## Patentansprüche

1. Soßenzusammensetzung, umfassend Gluten, Natrium und Asparaginsäure, wobei der Gehalt des Natriums 5 bis 65 Massenteile, bezogen auf 100 Massenteile Gluten, beträgt, und der Gehalt der Asparaginsäure 0,7 bis 4 Massenteile, bezogen auf 100 Massenteile Gluten, beträgt.

2. Soßenzusammensetzung gemäß Anspruch 1, wobei die Soßenzusammensetzung Kasein umfasst und der Gehalt des Kaseins 130 bis 550 Massenteile, bezogen auf 100 Massenteile Gluten, beträgt.

3. Soßenzusammensetzung gemäß Anspruch 1 oder 2, worin der Gehalt der Asparaginsäure 2,2 bis 3,35 Massenteile, bezogen auf 100 Massenteile Gluten, beträgt.

4. Soßenzusammensetzung gemäß einem der Ansprüche 1 bis 3, worin der Gehalt des Natriums 5 bis 45 Massenteile, bezogen auf 100 Massenteile Gluten, beträgt.

5. Soßenzusammensetzung gemäß einem der Ansprüche 1 bis 4, worin die Asparaginsäure von Natriumaspartat abgeleitet ist.

6. Soßenzusammensetzung gemäß einem der Ansprüche 1 bis 5, wobei die Soßenzusammensetzung Kalium umfasst und der Gehalt des Kalium 10 bis 75 Massenteile, bezogen auf 100 Massenteile Gluten, beträgt.

7. Soßenzusammensetzung gemäß Anspruch 6, worin der Gehalt des Natriums 0,38 bis 0,75 Massenteile von 1 Massenteil des Gesamtgehalts von Natrium und Kalium ausmacht.

8. Soßenzusammensetzung gemäß Anspruch 6, worin der Gehalt des Natriums 0,2 bis 0,45 Massenteile von 1 Massenteil der Gesamtmenge von Natrium und Kalium ausmacht.

9. Soßenzusammensetzung gemäß einem der Ansprüche 1 bis 8, wobei die Soßenzusammensetzung eine Zusammensetzung ist, die aus einer Bechamelsoße und einer weißen Soße ausgewählt ist.

10. Soßenzusammensetzung gemäß einem der Ansprüche 1 bis 9, wobei mindestens Weizenmehl, Butter, Kuhmilch, Natriumchlorid und Asparaginsäure und/oder ein Salz davon in der Soßenzusammensetzung gemischt sind.

11. Soßenzusammensetzung gemäß Anspruch 10, worin die Mischungsmenge der Asparaginsäure und/oder des Salzes davon 0,1 bis 0,45 Massenteile, bezogen auf 100 Massenteile der Mischungsmenge des Weizenmehls, beträgt.

12. Verwendung der Soßenzusammensetzung gemäß einem der Ansprüche 1 bis 8 als eine Bechamelsoße.

13. Verwendung von Asparaginsäure oder einem Salz davon zur Unterdrückung von Klumpen bei der Herstellung einer Gluten enthaltenden Soßenzusammensetzung.

14. Verwendung gemäß Anspruch 13, umfassend das Beimischen der Asparaginsäure in einer Menge von 0,7 bis 4 Massenteilen, bezogen auf 100 Massenteile Gluten.

15. Verfahren zur Herstellung einer Gluten enthaltenden Soßenzusammensetzung, umfassend das Beimischen von Natriumchlorid in einer Menge von 1 bis 15 Massenteilen und Asparaginsäure und/oder einem Salz davon in einer Menge von 0,1 bis 0,45 Massenteilen, bezogen auf 100 Massenteile Weizenmehl.

## Revendications

1. Composition de sauce comprenant du gluten, du sodium et de l'acide aspartique, dans laquelle la teneur en sodium est de 5 à 65 parties en masse pour 100 parties en masse du gluten, et la teneur en acide aspartique est de 0,7 à 4 parties en masse pour 100 parties en masse du gluten.

2. Composition de sauce selon la revendication 1, dans laquelle la composition de sauce comprend de la caséine, et la teneur en caséine est de 130 à 550 parties en masse pour 100 parties en masse du gluten.

3. Composition de sauce selon la revendication 1 ou 2, dans laquelle la teneur en acide aspartique est de 2,2 à 3,35 parties en masse pour 100 parties en masse du gluten.

4. Composition de sauce selon l'une quelconque des revendications 1 à 3, dans laquelle la teneur en sodium est de 5 à 45 parties en masse pour 100 parties en masse du gluten.

5. Composition de sauce selon l'une quelconque des revendications 1 à 4, dans laquelle l'acide aspartique est dérivé de l'aspartate de sodium.

6. Composition de sauce selon l'une quelconque des revendications 1 à 5, dans laquelle la composition de sauce comprend du potassium, et la teneur en potassium est de 10 à 75 parties en masse pour 100 parties en masse du gluten.

7. Composition de sauce selon la revendication 6, dans laquelle la teneur en sodium est de 0,38 à 0,75 partie en masse de 1 partie par masse de la teneur totale en sodium et en potassium.

8. Composition de sauce selon la revendication 6, dans laquelle la teneur en sodium est de 0,2 à 0,45 partie en masse de 1 partie par masse de la teneur totale en sodium et en potassium.

9. Composition de sauce selon l'une quelconque des revendications 1 à 8, dans laquelle la composition de sauce est une composition sélectionnée parmi une sauce béchamel et une sauce blanche.

10. Composition de sauce selon l'une quelconque des revendications 1 à 9, dans laquelle au moins de la farine de blé, du beurre, du lait de vache, du chlorure de sodium et de l'acide aspartique et/ou un sel de celui-ci sont incorporés dans la composition de sauce.

11. Composition de sauce selon la revendication 10, dans laquelle la proportion de mélange de l'acide aspartique et/ou du sel de celui-ci est de 0,1 à 0,45 partie en masse pour 100 parties en masse de la proportion de mélange de la farine de blé.

12. Utilisation de la composition de sauce selon l'une quelconque des revendications 1 à 8 comme sauce béchamel.

13. Utilisation de l'acide aspartique ou d'un sel de celui-ci pour supprimer des grumeaux lors de la production d'une composition de sauce contenant du gluten.

14. Utilisation selon la revendication 13, comprenant l'incorporation de l'acide aspartique dans une proportion de 0,7 à 4 parties en masse pour 100 parties en masse du gluten.

15. Procédé de production d'une composition de sauce contenant du gluten, comprenant l'incorporation du chlorure de sodium dans une proportion de 1 à 15 parties en masse, et un acide aspartique et/ou un sel de celui-ci dans une proportion de 0,1 à 0,45 partie en masse, pour 100 parties en masse de farine de blé.
